# EUROPÄISCHE PATENTANMELDUNG

(11) **EP 0 613 712 A1**
(43) Veröffentlichungstag der Anmeldung: **07.09.1994**
(21) Anmeldenummer: 94103221.1
(22) Anmeldetag: 03.03.1994
(51) Int. Cl.: B01D 53/34, B01D 53/08

(54) **Verfahren und Vorrichtung zur Trockenreinigung von heissen Gasen**

(30) Priorität: 05.03.1993 DE 4307007
(71) Anmelder: IC UMWELT- UND ANLAGENTECHNIK GmbH, D-01814 Rathmannsdorf (DE)
(72) Erfinder: Jonda, Michael, Dipl.-Ing., D-84061 Ergoldsbach (DE)
(74) Vertreter: Reinhard - Skuhra - Weise & Partner

(57) **Zusammenfassung**

Zum Entfernen von fluor-, chlor- und/oder schwefelhaltigen Verbindungen aus heißen Gasen, insbesondere Abgasen, wird im Wege einer Trockenreinigung vorgeschlagen, die Gase auf eine Temperatur unter 850°C geregelt mit einem Absorptionsmittel zu kontaktieren, das unvollständig zu Kalziumoxid umgesetztes Kalziumkarbonat aufweist.

Zur Durchführung des Verfahrens wird ein Heißgasabsorber mit einem Mehrbereichsabsorbergehäuse und integriertem Rekuperator zur Realisierung einer prozeßintegrierten Abgasreinigung vorgeschlagen.

## Beschreibung

Die Erfindung betrifft ein Verfahren zur Trockenreinigung von Gasen, insbesondere von heißen Abgasen zum Entfernen von fluor-, chlor- und/oder schwefelhaltigen Verbindungen sowie eine Vorrichtung zur Durchführung des Verfahrens.

Aufgrund der Komplexität der Abgasreinigung, insbesondere beim Brand von Tonen und Erden, besteht ein dringendes Bedürfnis nach Schaffung eines Verfahrens und einer Vorrichtung, die für die Heißgasentschwefelung sowie die Fluorabreinigung in den Abgasen sorgt. Betrachtet man jedoch den technischen Aufwand, der zur Installation und Betrieb dieser Rauchgasanlage notwendig ist, wird deutlich, daß es sich hierbei um eine Problemlösung handelt, die aus wirtschaftlichen Gründen für die mittelständische Industrie, wie Ziegel-, Glas- und Keramikindustrie, indiskutabel ist.

Hinzu kommt, daß häufig die heißen Ofenabgase für Trocknungsprozesse der Rohlinge eingesetzt werden und daher auch ein zusätzlicher Energieeinsatz nötig wäre.

Soweit derzeit zur Reinigung von Fluorwasserstoffen Trockenabsorptionsanlagen in Form von Kalkschüttschichtfiltern eingesetzt werden, arbeiten diese im wesentlichen bei der Absorption über dem Säuretaupunkt.

Auch sonstige aus dem Stand der Technik bekannte Trocken-Absorptionsanlagen, die nur in einem Temperaturbereich von bis zu maximal 500°C betrieben werden, haben den weiteren Nachteil, daß sie ausschließlich Fluorverbindung absorbieren können, nicht jedoch zusätzlich Schwefel- und Chlorverbindungen.

Der Erfindung liegt die Aufgabe zugrunde, ein Verfahren zur Trockenreinigung von heißen Gasen sowie eine geeignete Vorrichtung hierfür verfügbar zu machen mit dem bzw. der heiße Gase wirkungsvoll und zuverlässig von fluor-, chlor- und/oder schwefelhaltigen Verbindungen gereinigt werden können.

Erfindungsgemäß wird diese Aufgabe verfahrensseitig durch die im Patentanspruch 1 gekennzeichneten Merkmale und vorrichtungsseitig durch die im Patentanspruch 12 gekennzeichneten Merkmale gelöst.

Bevorzugte Merkmale, die die Erfindung vorteilhaft weiterbilden, sind den jeweils nachgeordneten Patentansprüchen zu entnehmen.

Bei dem erfindungsgemäßen Verfahren erfolgt somit die Trockenreinigung vorteilhaft dadurch, daß die fluor-, chlor- und/oder schwefelhaften Gase temperaturgeregelt unter 850°C mit einem unvollständig zu Kalziumoxid umgesetztes Kalziumkarbonat aufweisenden Absorptionsmittel kontaktiert werden, wobei bevorzugt im Bereich von 600°C bis 800°C gearbeitet wird. In günstiger Weise weist das bevorzugt großflächig zu kontaktierende Absorptionsmittel unvollständig zu Kalziumoxid umgesetztes Kalziumkarbonat auf, wobei hier die Erkenntnis ausgenutzt wird, daß der Kalk in diesem Temperaturbereich ein spezielles Absorptionsfenster besitzt, das eine gleichzeitige qualitative und quantitative Entfernung von Fluor und Schwefel ermöglicht. Die spezielle Wahl des Absorptionsmittels hat den weiteren Vorteil, daß sich der pH-Wert von ca. pH 7 auf pH 11 erhöht und gleichzeitig in vorteilhafter Weise eine ausreichende mechanische Festigkeit (Kalziumkarbonat) und ein ausreichendes Absorptionsverhalten (Kalziumoxid) ergibt. In günstiger Weise läßt sich gemäß der Erfindung im wesentlichen in diesem Temperaturbereich zwischen etwa 600°C und 800°C eine gleichmäßige Ausreinigung von Fluor, Chlor und SOₓ erreichen, wobei die Schadstoffe zu Kalziumchlorid, Kalziumsulfid und Kalziumfluorid umgewandelt werden.

Das neu entwickelte Hochtemperaturabsorptionsverfahren sowie die zugehörige Vorrichtung arbeiten vorteilhaft nach dem Prinzip, daß die Kalkentsäuerung bei Temperaturen insbesondere zwischen 600°C und 1000°C besonders große innere Oberflächen in den Kalkpartikeln hervorrufen und zudem gegenüber SO₂ besonders reaktionsfreudiges CaO schafft.

Für die Durchführung des Verfahrens kann jede kommerziell erhältliche Form von Kalk eingesetzt werden, wobei jedoch bei den einzelnen Kalksorten qualitative Unterschiede bestehen können, die den Wirkungsgrad beeinflussen können. Bewährt hat sich für das erfindungsgemäße Verfahren insbesondere der Thüringer Kalk. Der Kalk wird entweder als Naturprodukt oder industriell aufbereitet eingesetzt.

Gemäß einer bevorzugten Ausgestaltung der Erfindung werden die zu reinigenden Gase bzw. Rohgase oder Abgase, die beispielsweise eine Temperatur von ca. 950°C bis 1200°C aufweisen, vor dem Kontaktieren auf eine Temperatur von etwa 600°C bis 800°C gebracht. Diese Abkühlung wird vorzugsweise durch Mischen mit Frischluft erreicht und beibehalten.

Die auf dem Bereich von etwa 600°C bis 800°C geregelte Temperatur der zu reinigenden Gase wird somit auf etwa 600°C bis 800°C geregelt, wobei die Wärme der zu reinigenden Gase vorzugsweise das Absorptionsmittel direkt auf diesen Temperaturbereich, vorzugsweise auf etwa 800°C bringen, also gerade den Temperaturbereich, in dem Kalziumkarbonat einen Anteil von umweltbeständig umgesetzten Kalziumoxid aufweist.

Vorzugsweise werden die zu reinigenden Gase mit dem Absorptionsmittel großflächig kontaktiert, wobei dieses in zumindest grob zerkleinerter Form vorliegendes Kalziumkarbonat aufweist.

Gemäß einer bevorzugten weiteren Ausgestaltung der Erfindung wird das flächig zu kontaktierende Absorptionsmittel bei einer Temperatur von etwa 800°C zur Entsäuerung des Kalkes vorbehandelt, um einen optimalen Wirkungsgrad für die Reinigung vorzusehen und gleichzeitig auch die Voraussetzungen für ein kontinuierliches Durchführen des Verfahrens bzw. Arbeitens mit der Vorrichtung zu schaffen.

Vorzugsweise wird das Kontaktieren mit Unterdruck vorgenommen, wobei bevorzugt die zu reinigenden Gase querströmend über das Absorptionsmittel geführt werden. Hierdurch ergeben sich ideale Kontaktierungsbedingungen. Insbesondere wenn eine kontinuierliche Kontaktierung mit einem kontinuierlichen Austausch und Austrag verbrauchten Absorptionsmittels vorgenommen wird, läßt sich das Verfahren im 24-Stunden-Betrieb auch ohne Anfahrprobleme zuverlässig und wirkungsvoll betreiben.

Das gereinigte Gas wird bevorzugt mit vorgewärmter Frischluft zur Temperatursenkung auf ca. 150°C bis 200°C vermischt. In diesem Temperaturbereich kann problemlos eine Absauganlage betrieben werden und gleichzeitig kann das Gemisch aus gereinigtem Gas und Frischluft auch als vorgewärmte Luft zur Trocknung, beispielsweise von Rohlingen eingesetzt werden. Vorteilhaft wird also bei dem erfindungsgemäßen Verfahren und bei der erfindungsgemäßen Vorrichtung die Abwärme des zu reinigenden Gases nicht nur dazu ausgenutzt, ohne zusätzliche Fremdenergie das Absorptionsmittel in dem gewünschten Temperaturbereich zu halten, sondern auch noch sekundäre Prozeßwärme in der gereinigten Luft ausnutzen zu können. Realisiert wird damit in günstiger Weise eine sogenannte prozeßintegrierte Abgasreinigung, die vorteilhaft die Vorschriften gemäß TA-Luft deutlich übertrifft und nur mit geringstem zusätzlichen Energieaufwand für Regelung und elektrische Antriebe der Beschickung und Austrag auskommt.

Das erfindungsgemäße Verfahren und die erfindungsgemäße Vorrichtung kann nicht nur zur Reinigung von Abgasen eingesetzt werden, die bei den eingangs genannten Fluorierungstechniken entstehen, sondern ist auch wirtschaftlich beim Brand von Tone und Erden (Ziegel-, Glas- und Keramikindustrie) einsetzbar, bei dem zusätzlich große Mengen von Fluor, Chlor und Schwefel anfallen.

Die wesentlichen Vorzüge des erfindungsgemäßen Verfahrens liegen in der energetischen Wirkungsgraderhöhung am Ofensystem, in der erzielbaren Rauchgasreinigung (Fluor und Schwefel gemäß TA-Luft), in der Erhöhung der Standzeit der Vorrichtung sowie in der Wirtschaftlichkeit von Trocknungsanlagen, da in diesen keine sauren Gase im Trocknungsprozeß eingesetzt werden und demgemäß keine Korrosionsprobleme und keine Qualitätsminderung eingesetzter Produkte durch Kondensatflecken auftreten.

Die erfindungsgemäße Vorrichtung zur Durchführung des Verfahrens weist vorteilhaft ein Absorbergehäuse mit drei Abschnitten bzw. Bereichen auf, einem Einlaßbereich, der als Rohgassammelraum dient, einen Kontaktierungsbereich, in dem Kaskaden mit Absorptionsmittelelementen querströmend von den zu reinigenden Gasen beaufschlagt werden, und einen Auslaßbereich, der als Reingassammelraum fungiert. Durch geeignete Maßnahmen werden in jedem der Bereiche bestimmte Temperaturbedingungen eingehalten, wobei erfindungsgemäß hochtemperaturfeste Gasmischeinrichtungen mit Temperaturregeleinrichtungen sowohl für den Einlaßbereich als auch für den Auslaßbereich vorgesehen sind.

Gemäß einer bevorzugten Ausgestaltung der Erfindung erfolgt die Kalkentsäuerung in einer separaten Vorgangszone, die vorzugsweise oberhalb des Absorbergehäuses angeordnet ist, und dem Absorbergehäuse ist ein Kalziumkarbonatsilo vorgeschaltet, aus dem pneumatisch frisches Kalziumkarbonat in die Vorgangszone zur Kalkentsäuerung förderbar.

Gemäß einer bevozugten Ausgestaltung der Erfindung sind die Kaskaden mit Absorptionsmittelelementen so aufgebaut, daß durch Querstrom zwischen Kalk und zu reinigenden Gasen ein optimaler Austausch stattfindet. Dabei sind die Absorptionsmittelelemente zwischen Prallstegen von kaskadenförmig angeordneten Blechkanälen in dem Absorbergehäuse vorgesehen. Die Austauschlänge zwischen dem zu reinigenden Gasgemisch und dem Absorptionsmittel ist vorzugsweise durch Prallstege definierbar.

Von den Absorptionsmittelelementen der Kaskaden ist nach einer bevorzugten weiteren Ausgestaltung der Erfindung kontinuierlich gesättigtes Absorptionsmittel entfernbar und durch ungesättigtes Absorptionsmittel ersetzbar, wobei das Absorptionsmittel kontinuierlich stromförmig austauschbar ist und gebenenfalls in mehrere Austauschbereiche aufteilbar ist. Die Prallstege schaffen nach dem Schichtenbildungsgesetz 3 oder mehrere Kalkaustauschbereiche in der Kaskade, die durch die Gase über die Eintrittshöhe unterschiedlich beaufschlagt werden, damit gesättigte Sorbens nicht in den Eintrittsbereich der unterliegenden Rohgaseintrittsbereiche gelangt. Ein individueller Kalkabtrieb wird dabei sicher derart gehandhabt, daß keine Druckverlusterhöhung über den Kaskadenquerschnitt 12 zu befürchten ist. Das gesättigte Absorptionsmaterial wird über einen Auffangtrichter, in dem ein Schneckengang eingebaut ist, sicher ausgetragen.

Gemäß einer bevorzugten Ausgestaltung der Erfindung ist für die Verteilung des zu reinigenden temperierten Gases über die Kaskaden eine Absaugeinrichtung vorgesehen, durch die nach dem Querdurchströmen durch das Absorbergehäuse temperiertes Gasgemisch aus dem Auslaßbereich des Absorbergehäuses abführbar ist, wobei durch die Absaugeinrichtung vorteilhaft der Druck in dem Absorbergehäuse auf nahezu 0 mm WS abstimmbar ist, und wobei ferner in der Gaszuführleitung für zu reinigendes Gas ein zusätzliches Druckregelsystem integriert ist.

Zur sicheren Handhabung der Gase mit hohen Temperaturen sind zudem von innen keramisch ausgekleidete und außen isolierte Zuführleitungen für das Absorbergehäuse vorgesehen.

Die Temperierung des gereinigten Gases in dem Auslaßbereich ist entweder mit Umgebungsluft oder auch vorgewärmter Frischluft möglich, die entweder aus einer Doppelmantelvorwärmung des Absorbergehäuses oder aus dem Ofenbereich stammt. Die Absaugeinrichtung ist bevorzugt als Reinluftabzug mit Exhaustor ausgebildet.

Bei dem Verfahren und der Vorrichtung erfolgt nicht nur ein Einblasen heißer zu reinigende Gase von der Prozeß- bzw. Hochgasseite, sondern, wie zuvor erwähnt, auch eine Beschleunigung von der Reinluftseite durch geeignete Exhaustoren. Um eine möglichst gleichmäßige Temperaturverteilung herzustellen, wird bevorzugt der Kalk ständig im Querstrom aus dem Hochtemperaturbereich abgeführt und über automatische Transporteinrichtungen einer Analyseeinheit zugeführt. Er kann anschließend nach einem Schälverfahren wiederaufbereitet und dem erfindungsgemäßen Absorptionsprozeß erneut zugeführt werden.

Bei einer bevorzugten Ausgestaltung der erfindungsgemäßen Vorrichtung erfolgt eine kontinuierliche Zufuhr und großflächige Verteilung des unvollständig zu Kalziumoxid umgesetztes Kalziumkarbonat aufweisenden Absorptionsmitttels auf die einzelnen bettenförmigen Absorptionsmittelelemente, wobei eine Temperatur von 600°C bis 800°C eingehalten ist und wobei auch eine Beheizung der Absorptionsmittelelemente durch die Wärme des zugeführten zu reinigenden Gases in den vorgesehenen Bereich, vorzugsweise bei 800°C, erfolgt. Die Temperatur der Kaskaden wird kontinuierlich geregelt, ebenso wie der Temperaturbereich des gemischten zu reinigenden Gases, das über den gesamten Kaskadenraum verteilt wird. Dabei erfolgt eine Absorption von Fluor, Chlor und SOₓ an Kalk bei 600°C bis 800°C, wobei ein Zwischenschritt über CaO verläuft und als Endprodukt unter anderem Kalziumchlorid, Kalziumsulfid und Kalziumfluorit entstehen. Das gereinigte Gas wird mit gegebenenfalls vorgewärmter Frischluft in einem Temperaturbereich von 150°C bis 200°C gebracht und kann zur Ausnützung der Gaswärme noch prozeßmäßig weiter verwertet werden. Gleichzeitig mit der kontinuierlichen Zufuhr von CaCO₃ erfolgt auch eine kontinuierliche Abfuhr des verbrauchten CaCO₃, wobei eine reine Verwendung von Kalziumkarbonat-Gipsgemisch vorgesehen sein kann.

Nachfolgend wird die Erfindung unter Bezugnahme auf die beigefügten Zeichnungen näher erläutert. Es zeigen:
- Fig. 1: eine Vorderansicht eines Ausführungsbeispiels einer erfindungsgemäßen Vorrichtung;

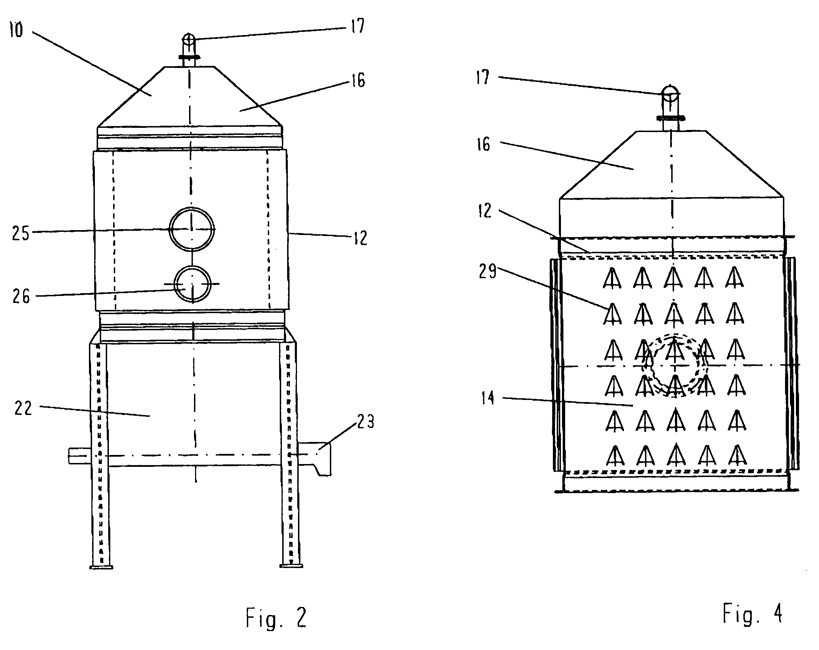

- Fig. 2: einen Schnitt entlang der Schnittlinie II-II in Fig. 1;
- Fig. 3: einen Schnitt entlang der Schnittlinie III-III in Fig. 1; und
- Fig. 4: einen Schnitt entlang der Schnittlinie IV-IV in Fig. 1.

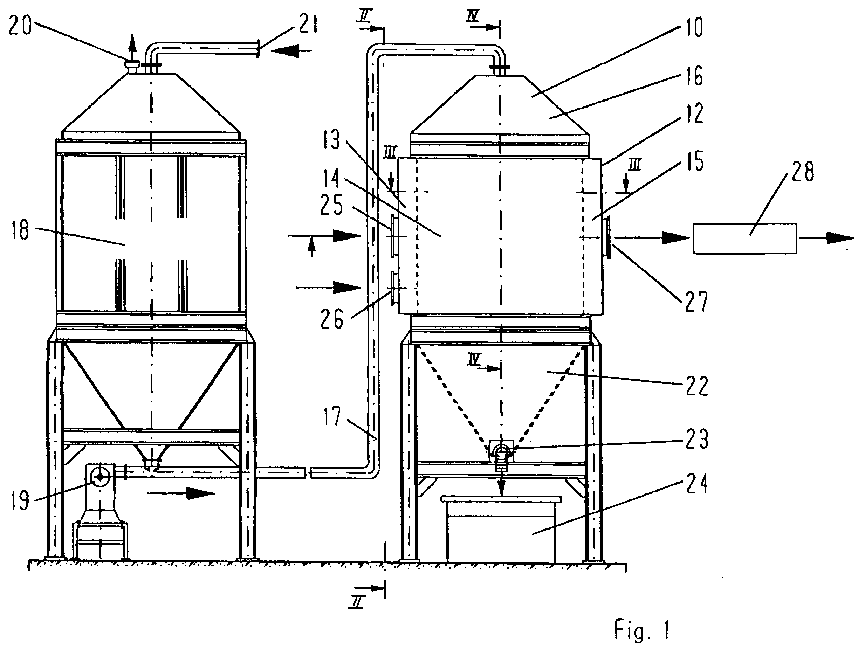

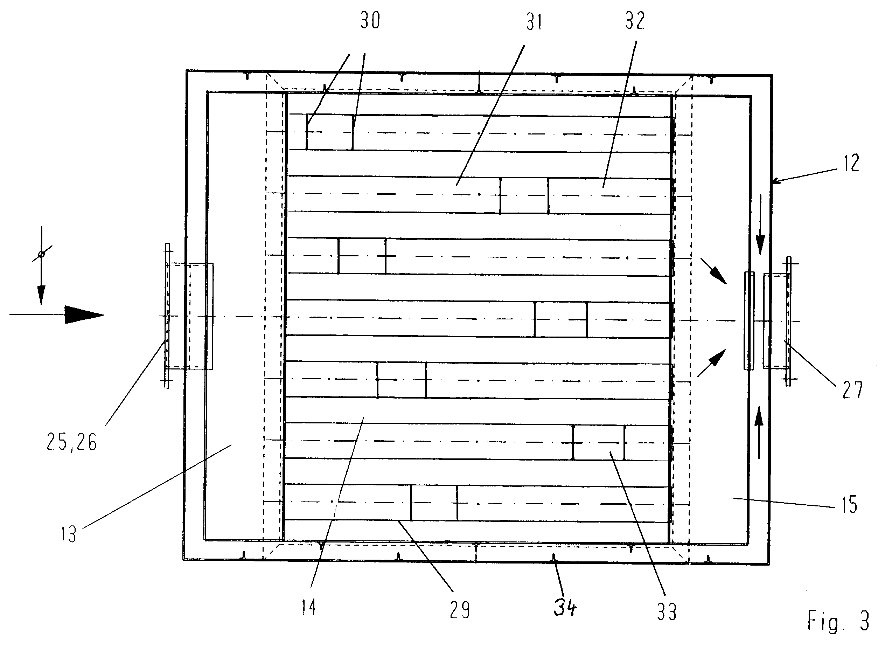

In Fig. 1 ist ein Ausführungsbeispiel einer Vorrichtung 10 zur Trockenreinigung von heißen Gasen, insbesondere von heißen Abgasen, in Form eines sogenannten Heißgasabsorbers mit integriertem Rekuperator dargestellt. Die Vorrichtung 10 besitzt ein Absorbergehäuse 12, in dem ein Einlaßbereich 13, ein Kontaktierungsbereich 14 und ein Auslaßbereich 15 gebildet sind, vgl. Fig. 3. Oberhalb des Absorbergehäuses 12 ist eine kuppelartige Vorgangszone 16 zur Kalkentsäuerung von Kalziumkarbonat angeordnet. Die Vorgangszone 16 wird über eine Förderleitung 17 mit frischem Kalziumkarbonat aus einem Vorratssilo 18 mit Hilfe eines pneumatischen Fördersystems versorgt, zu dem ein Ventilator 19 gehört. An der Oberseite des Vorratssilos 18 befindet sich eine Einrichtung 20 zum Druckausgleich bei Befüllung sowie der Einlaß einer Fülleitung 21, über die das Vorratssilo 18 mit Kalziumkarbonat beschickt wird.

Unterhalb des Absorbergehäuses 12 ist ein Auffangtrichter 22 für gesättigtes Absorptionsmittel angeordnet, aus dem dieses durch eine Fördereinrichtung 23, die einen Schneckengang aufweist, nach außen in einen Auffangbehälter 24 zur Analyse und Weiterverwertung bzw. Wiederaufbereitung ausbringbar ist.

Das Absorbergehäuse 12 weist einen Einlaß 25 auf, in den zu reinigendes Gas, das zuvor mittels einer nicht dargestellten Gasmischeinrichtung bereits durch Zumischung von Frischluft auf eine Temperatur von etwa 1000°C abgekühlt worden ist in den Einlaßbereich 13 eingeführt wird. Vorgesehen ist weiterhin ein Einlaß 26 für Frischluft, die in einer solchen Menge geregelt zugeführt wird, daß sich in dem Einlaßbereich 13 eine Gastemperatur in dem Bereich zwischen 600°C und 800°C einstellt.

Am Ausgangsbereich 15 ist eine Auslaßöffnung 27 gebildet, aus der ein Gemisch aus gereinigtem Gas und gegebenenfalls vorgewärmter Frischluft, das in dem Auslaßbereich ab einer Temperatur von 150°C bis 200°C geregelt wird, mittels einer Absaugeinrichtung 28 abgezogen wird. Durch die Beschickung des Absorbergehäuses in dem Einlaßbereich und dem Absaugen aus dem Auslaßbereich wird innerhalb des Kontaktierungsbereichs 14 eine Querströmung erzeugt, die aufgrund der flächigen Gestaltung des Einlaßbereichs und des Auslaßbereichs sich über die gesamte vertikale Querschnittsfläche des Kontaktierungsbereichs 14 erstreckt.

Der Kontaktierungsbereich 14 ist in Fig. 3 und 4 näher dargestellt. Er weist kaskadenförmig angeordnete horizontale Blechkanäle 29 auf, die, wie aus Fig. 4 ersichtlich im Schnitt dreiekkig ausgebildet sind. Jeder Blechkanal 29 ist durch das Einfügen von jeweils zwei Prallstegen 30 in einen mit dem Einlaßbereich 13 verbundenen Rohgasbereich 31 und einen mit dem Auslaßbereich 15 verbundenen Reingasabschnitt 32 unterteilt. Dabei ist die Anordnung so getroffen, daß in einer horizontalen Lage vorhandene Blechkanäle 29 zueinander versetzte Anordnungen von Prallstegen 30 aufweisen, so daß unterschiedlich lange Rohgasabschnitte 31 und Reingasabschnitte 32 gebildet sind.

Der Abschnitt zwischen den beiden Prallstegen 30 jedes Blechkanals 29 ist als Absorptionselement 33 ausgebildet und geometrisch so gestaltet, daß sowohl eine ungehinderte vertikale Strömung des Absorptionsmittels als auch eine ungehinderte Horizontalströmung des zu reinigenden Gasgemisches ermöglicht wird. Durch den festgelegten Abstand der beiden jeweils ein bettenartiges Absorptionselement 33 begrenzenden begrenzenden Prallstege 30 ist eine definierte Austauschlänge zwischen dem zu reinigenden Gasgemisch und dem Absorptionsmittel gegeben.

Es ist eine treppenartig versetzte Anordnung der Absorptionselemente 33 vorgesehen, die zusammen mit der kontinuierlichen Vertikalströmung des Absorptionsmittels von der Vorgangszone 16 nach unten gewährleistet, daß an jedem Absorptionselement 33 frisches, unverbrauchtes Absorptionsmittel in definierter Zusammensetzung für die Gasreinigung zur Verfügung steht. Die treppenartige Anordnung kann statt der dargestellten zweifachen Staffelung auch in einfacher sowie drei- und mehrfacher Staffelung vorgesehen sein.

Nach einer Weiterbildung der Erfindung kann das Absorbergehäuse 12, wie in Fig. 3 gezeigt, doppelwandig ausgebildet sein, wobei in dem Bereich zwischen den Wänden Leitbleche 34 vorgesehen sind, die zur seitlichen Umlenkung von zu reinigenden Gasströmen auf die Absorptionselemente dienen.

## Patentansprüche

1. Verfahren zur Trockenreinigung von Gasen, insbesondere von heißen Abgasen, zum Entfernen von fluor-, chlor- und/oder schwefelhaltigen Verbindungen,
**dadurch gekennzeichnet,**
daß die fluor-, chlor- und/oder schwefelhaltigen Gase unter 850°C temperaturgeregelt mit einem unvollständig zu Kalziumoxid umgesetztes Kalziumkarbonat aufweisenden Absorptionsmittel kontaktiert werden.

2. Verfahren nach Anspruch 1, dadurch gekennzeichnet, daß die Temperatur des zu kontaktierenden Absorptionsmittels während der Trockenreinigung auf einen Temperaturbereich von etwa 600°C bis 800°C geregelt wird.

3. Verfahren nach Anspruch 2, dadurch gekennzeichnet, daß die Temperatur unter Verwendung der Wärme der zu reinigenden Gase geregelt wird.

4. Verfahren nach einem der vorangehenden Ansprüche, dadurch gekennzeichnet, daß die zu reinigenden Gase vor dem Kontaktieren auf eine Temperatur von etwa 600°C bis 800°C gebracht werden.

5. Verfahren nach einem der vorangehenden Ansprüche, dadurch gekennzeichnet, daß die zu reinigenden Gase mit dem Absorptionsmittel großflächig kontaktiert werden.

6. Verfahren nach einem der vorangehenden Ansprüche, dadurch gekennzeichnet, daß das flächig zu kontaktierende Absorptionsmittel über eine Temperatur von etwa 800°C zur Entsäurung von Kalziumkarbonat vorbehandelt wird.

7. Verfahren nach einem der vorangehenden Ansprüche, dadurch gekennzeichnet, daß das Kontaktieren des Absorptionsmittels mit Unterdruck vorgenommen wird.

8. Verfahren nach einem der vorangehenden Ansprüche, dadurch gekennzeichnet, daß die zu reinigenden Gase querströmend über das Absorptionsmittel geführt werden.

9. Verfahren nach einem der vorangehenden Ansprüche, dadurch gekennzeichnet, daß eine kontinuierliche Kontaktierung mit einem kontinuierlichen Austausch und Austrag von verbrauchtem Absorptionsmittel vorgenommen wird.

10. Verfahren nach Anspruch 4, dadurch gekennzeichnet, daß zu reinigende Gase vor dem Kontaktieren durch Zumischung von Frischluft auf eine Temperatur von etwa 600°C bis 800°C geregelt abgekühlt werden.

11. Verfahren nach einem der vorangehenden Ansprüche, dadurch gekennzeichnet, daß das gereinigte Gas mit vorzugsweise vorgewärmter Frischluft zur Temperatursenkung auf ca. 150°C bis 200°C vermischt wird.

12. Vorrichtung zur Durchführung des Verfahrens nach Anspruch 1, bestehend aus einem Absorbergehäuse (12)
mit einem für die Aufnahme eines Gemischs aus zu reinigenden Gasen und Umgebungsluft in einem Temperaturbereich von 600°C bis 800°C vorgesehenen Einlaßbereich (13),
einem zur großflächigen Kontaktierung Kaskaden mit Absorptionselementen (33) bei einer Temperatur von weniger als 850°C aufweisenden Kontaktierungsbereich (14), und mit
einem für die Aufnahme eines Gemischs aus gereinigten Gasen und Umgebungsluft in einem Temperaturbereich von 150°C bis 200°C vorgesehenen Auslaßbereich (15).

13. Vorrichtung nach Anspruch 12, dadurch gekennzeichnet, daß die Kaskaden in dem Absorbergehäuse (12) aus Blechkanälen (29) bestehen, die durch Prallstege (30) unterbrochen sind, zwischen denen zu kontaktierende Absorptionselemente (33) gebildet sind.

14. Vorrichtung nach Anspruch 12 oder 13, dadurch gekennzeichnet, daß die Absorptionselemente (33) für das Befüllen mit Absorptionsmittel wenigstens von oben zugänglich sind.

15. Vorrichtung nach einem der Ansprüche 12 bis 14, dadurch gekennzeichnet, daß die Kaskade mit Absorptionselementen (33) mehrere horizontale Kaskadenlagen aufweist, bei denen die Absorptionselemente entgegen einander versetzt angeordnet sind.

16. Vorrichtung nach Anspruch 15, dadurch gekennzeichnet, daß die Absorptionselemente (33) jeder horizontalen Kaskadenlage wenigstens zweifach gestaffelt bzw. treppenartig versetzt angeordnet sind.

17. Vorrichtung nach einem der Ansprüche 13 bis 16, dadurch gekennzeichnet, daß jeder Blechkanal (29) einen dreieckigen Querschnitt mit zwei gleichen nach oben weisenden Schenkeln besitzt.

18. Vorrichtung nach einem der Ansprüche 12 bis 17, dadurch gekennzeichnet, daß von den Absorptionselementen (33) kontinuierlich gesättigtes Absorptionsmittel entfernbar und durch ungesättigtes Absorptionsmittel ersetzbar ist.

19. Vorrichtung nach Anspruch 18, dadurch gekennzeichnet, daß für das Entfernen von gesättigtem Absorptionsmittel unterhalb des Absorbergehäuses (12) ein Auffangtrichter (22) mit einem eingebauten Schneckengang (23) vorgesehen ist.

20. Vorrichtung nach einem der Ansprüche 12 bis 19, dadurch gekennzeichnet, daß die Temperatur der Absorptionselemente (33) für eine Kalkentsäuerung auf etwa 800°C regelbar ist.

21. Vorrichtung nach Anspruch 20, dadurch gekennzeichnet, daß für die Temperaturregelung der Absorptionsmittelelemente (33) Abwärme von zu reinigenden Gasen vorgesehen ist.

22. Vorrichtung nach einem der Ansprüche 12 bis 21, dadurch gekennzeichnet, daß hochtemperaturfeste Gasmischeinrichtungen mit Temperaturregeleinrichtungen für den Einlaßbereich (13) und den Auslaßbereich (15) vorgesehen sind.

23. Vorrichtung nach einem der Ansprüche 12 bis 22, dadurch gekennzeichnet, daß für die Verteilung der zu reinigenden temperierten Gase über dem Kontaktierungsbereich (14) eine Absaugeinrichtung (28) vorgesehen ist, durch die ein nach dem Querdurchströmen durch das Absorbergehäuse (12) erneut temperiertes Gasgemisch aus dem Einlaßbereich (15) des Absorbergehäuses (12) abführbar ist.

24. Vorrichtung nach Anspruch 23, dadurch gekennzeichnet, daß durch die Absaugeinrichtung (28) der Druck in dem Absorbergehäuse (12) auf nahezu 0 mm WS abstimmbar ist.

25. Vorrichtung nach Anspruch 23 oder 24, dadurch gekennzeichnet, daß in der Gaszuführleitung für zu reinigende Gase ein zusätzliches Druckregelsystem integriert ist.

26. Vorrichtung nach einem der Ansprüche 20 bis 25, dadurch gekennzeichnet, daß die Kalkentsäuerung in einer separaten Vorgangszone (16) vorgesehen ist.

27. Vorrichtung nach Anspruch 26, dadurch gekennzeichnet, daß dem Absorbergehäuse (12) ein Kalziumkarbonatsilo (18) vorgeschaltet ist, aus dem pneumatisch frisches Kalziumkarbonat in die Vorgangszone (16) zur Kalkentsäuerung entförderbar ist.

28. Vorrichtung nach einem der Ansprüche 12 bis 27, dadurch gekennzeichnet, daß für das Absorbergehäuse (12) von innen keramisch ausgekleidete und außen isolierte Zuführleitungen vorgesehen sind.
